(19) **Europäisches Patentamt / European Patent Office / Office européen des brevets**

(11) **EP 2 617 510 B1**

(12) **EUROPEAN PATENT SPECIFICATION**

(45) Date of publication and mention of the grant of the patent:
**09.11.2016 Bulletin 2016/45**

(21) Application number: **11825073.7**

(22) Date of filing: **08.09.2011**

(51) Int Cl.:
*B23K 11/20* (2006.01)  *B23K 11/11* (2006.01)
*B23K 11/24* (2006.01)  *B23K 103/20* (2006.01)
*B23K 11/34* (2006.01)

(86) International application number:
**PCT/JP2011/070508**

(87) International publication number:
**WO 2012/036070 (22.03.2012 Gazette 2012/12)**

(54) **METHOD FOR JOINING DIFFERING MATERIALS**

VERFAHREN ZUR VERBINDUNG VERSCHIEDENER MATERIALIEN

PROCÉDÉ POUR ASSEMBLER DES MATIÈRES DIFFÉRENTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.09.2010 JP 2010204393**

(43) Date of publication of application:
**24.07.2013 Bulletin 2013/30**

(73) Proprietor: **Kabushiki Kaisha Kobe Seiko Sho
Chuo-ku
Kobe-shi
Hyogo 651-8585 (JP)**

(72) Inventors:
• **KINEFUCHI, Masao
Kobe-shi, Hyogo 651-2271 (JP)**

• **HATA, Hideo
Kobe-shi, Hyogo 651-2271 (JP)**

(74) Representative: **Müller-Boré & Partner
Patentanwälte PartG mbB
Friedenheimer Brücke 21
80639 München (DE)**

(56) References cited:
EP-A1- 1 738 854    EP-A2- 1 974 847
GB-A- 2 468 011    JP-A- 6 122 079
JP-A- 7 328 774    JP-A- 10 296 456
JP-A- 63 177 977    JP-A- 2001 353 578
JP-A- 2003 200 269    JP-A- 2003 236 673
JP-A- 2004 017 148    JP-A- 2005 319 481
JP-A- 2007 144 473    JP-A- 2007 260 777
JP-A- 2010 188 408

**Description**

The present invention relates to a dissimilar metal joining method by spot welding of a steel sheet and an aluminum alloy sheet, such as known from EP-A-1 738 854.

Background Art

In recent years, against global environmental problems due to exhaust gases and the like, there has been pursued the improvement of fuel economy by weight reduction of the body of transportation equipment such as an automobile. Further, there has also been pursued the enhancement of the safety upon body collision of an automobile while minimizing the inhibition of the weight reduction. For this reason, particularly, various studies have been made on the application of an aluminum alloy sheet light in weight and also excellent in energy absorbency to the automotive body structure. Herein, the aluminum alloy sheet referred to in the present invention is the generic term of a rolled sheet such as a hot rolled sheet or a cold rolled sheet of an aluminum alloy. Whereas, the steel sheet means a cold rolled steel sheet, but will also be simply referred to as a steel sheet below.

A study has been made on the use of aluminum alloy sheets such as Al-Mg-Si series AA or JIS 6000 series (which will be hereinafter simply referred to as 6000 series) and Al-Mg series AA or JIS 5000 series (which will be hereinafter referred to as 5000 series) for panels such as outer panels and inner panels of the panel structures such as the food, the fender, the door, the roof, and the trunk lid of an automobile.

However, for application of an aluminum alloy to the automotive body, a structural design making the best use of the characteristics of the aluminum alloy is required. This incurs a demand for use of right high tensile strength steel sheets and aluminum alloy sheets to right parts. To this end, it is necessary to establish an automotive body structure including a steel and an aluminum alloy mixed therein. Thus, a joining technology of a steel and an aluminum alloy to be combined with each other becomes essential. Namely, also when a steel sheet and an aluminum alloy sheet are combined, necessarily, there is caused a necessity of Fe-Al dissimilar metal joining (joining between dissimilar metal members of iron-aluminum).

However, as the problem upon performing the Fe-Al dissimilar metal joining by welding, there occurs the formation of an intermetallic compound layer (which will also be referred to as a reaction layer) of Fe and Al which has a high hardness and is very brittle at the mutual joint interface. For this reason, even when the mutual joint is apparently achieved therebetween, due to the formation of the present compound layer, a sufficient joint strength often cannot be obtained for the dissimilar metal joined body with Fe-Al dissimilar metal joining by welding.

Reflecting this, conventionally, for joining of the dissimilar metal joined body (joined body of dissimilar metal members), not only welding, but also mechanical joining such as self pierce riveting or bolting, or joining using an adhesive have been put into practical application. However, there are practical problems such as complexity of the joining operation and an increase in joining cost.

Under such circumstances, a study has conventionally been made on the dissimilar metal joining by efficient spot welding widely used for joining of a general automotive body. For example, there has been proposed a method in which an aluminum-steel clad material is inserted between an aluminum alloy sheet and a steel sheet. Further, there has been proposed a method in which a metal with a low melting point is plated or inserted on the steel sheet side. Still further, there have also been proposed a method in which insulator particles are interposed between an aluminum alloy sheet and a steel sheet; a method in which a member is previously made uneven; and other methods. Furthermore, there has also been proposed the following method: a non-uniform oxide film of an aluminum alloy sheet is removed; then, heating is performed in the air to form a uniform oxide film; thus, with the contact resistance of the aluminum surface raised, a multilayer steel sheet of two layers of aluminum-steel is used as an inserting material to perform spot welding.

On the other hand, the following is also known: also on the steel sheet side of the material, the thickness of an oxide including Si, Mn, Al, or the like formed on the steel sheet surface by elements such as Si, Mn, and Al to be added for enhancing the strength of the steel sheet is controlled; this improves the adhesion between surface covering such as zinc plating and the steel sheet, and the spot weldability between steel sheets (see

Patent Document 1).

However, with these related-art technologies, under joining conditions by efficient spot welding, widely used for joining of a general automotive body, a sufficient joint strength cannot be obtained. In other words, the spot welding conditions for obtaining the joint strength must become complicated, resulting in no practical utility.

In contrast to this, there have also been proposed various technologies intended for spot welding of dissimilar metal joined bodies of 6000 series aluminum alloy sheets or the like and a high strength steel sheet (high tensile strength material) with a tensile strength of 450 MPa or more, widely used for an automotive body.

For example, in Patent Documents 2 and 3, the following are proposed: a steel sheet and an aluminum alloy sheet each with a thickness controlled to 3 mm or less are spot welded in such a form that two or more steel sheets are stacked, or the steel sheet is interposed between the aluminum alloy sheets. In Patent Document 4, the following is proposed: the nugget area at the spot welding part and the thickness of the interface reaction layer are specified to improve the joint strength. Further, in Patent Documents 5 and 6, the composition, thickness, area, and the like of each formed compound on the steel sheet side and on the aluminum alloy sheet side at the welding interface are specified closely, respectively, to improve the joint strength.

Still further, in Patent Documents 7 to 9, the following is proposed: in a high strength steel sheet with a specific composition, another external oxide layer or internal oxide with a specific composition of Mn and Si is formed on the steel sheet surface to aim at a high joint strength of a dissimilar metal joined body.

Further, from the side of the spot welding conditions, there are variously proposed the electrode shape (see Patent Documents 10 and 11), the large-current short-time conditions (see Patent Document 12), the pulse control of the welding current (see Patent Documents 13 and 14), and the like.

Prior Art Documents

Patent Documents

Patent Document 1: JP-A No. 2002-294487
Patent Document 2: JP-A No. 2007-144473
Patent Document 3: JP-A No. 2007-283313
Patent Document 4: JP-A No. 2006-167801
Patent Document 5: JP-A No. 2006-289452
Patent Document 6: JP-A No. 2007-260777
Patent Document 7: JP-A No. 2006-336070
Patent Document 8: JP-A No. 2009-299138
Patent Document 9: JP-A No. 2009-299139
Patent Document 10: JP-A No. 11-342477
Patent Document 11: JP-A No. 2008-200678
Patent Document 12: Japanese Patent No. 3941001
Patent Document 13: Japanese Patent No. 4425159
Patent Document 14: JP-A No. 2006-224127

Disclosure of the Invention

Problem to Be Solved by the Invention

Incidentally, attention will be focused on the welding current in welding between a cold rolled steel sheet and an aluminum alloy sheet of the spot welding conditions disclosed in the related-art technologies. This indicates that a higher welding current than in spot welding between steel sheets is often used. This is because the welding current required (used) in spot welding between aluminum alloys is inherently high. Therefore, for a dissimilar metal joined body of a 6000 series aluminum alloy sheet or the like and a high strength steel sheet, in actuality, in order to obtain the joint strength, there is no other choice but to use such a high welding current as used in spot welding between aluminum alloys.

However, when the welding current during spot welding is thus high, not only expulsion of aluminum occurs at the steel sheet-aluminum alloy sheet interface, but also expulsion may occur between the steel sheet surface and the electrode.

With spot welding between the steel sheet and the aluminum alloy sheet, the joint strength is ensured by inhibiting the formation of a brittle intermetallic compound by suitable welding conditions, and ensuring the area wide. For this reason, when expulsion from the steel sheet surface is caused, the expulsion occurrence takes the heat input, which makes it impossible to obtain a sufficient joint strength. Further, expulsion (spark) scatters during welding, and hence the working environment is not good, either.

Such expulsion occurrence is caused by heat generation due to the contact resistance between the steel sheet surface and the electrode. For this reason, as the methods for inhibiting this, the following three methods can be considered, but they have respective problems as follows:

(1) Welding current is reduced:

Deviation from the high welding current conditions (suitable welding conditions) results in a higher possibility that the joint strength cannot be obtained.

(2) Electrode force is raised:

The occurrence of expulsion of aluminum from the interface between the steel sheet and the aluminum alloy sheet intensifies.

(3) Tip R of electrode is reduced in size to suppress the contact area (the contact surface pressure is raised, and contact resistance is reduced):

The nugget diameter is reduced, resulting in reduction of the strength per point of spot points.

If the expulsion occurrence from the steel sheet surface can be suppressed, and the welding current can be minimized, the elongation of the electrode life is expected, which is also expected to contribute to the improvement of the productivity. However, in actuality, the spot welding method effective for enabling the suppression of the occurrence of the expulsion from the steel sheet surface, and minimization of the welding current has hardly been proposed so far as described above.

The present invention was completed in view of such problems. It is an object of the present invention to provide a spot welding method in which the spot welding conditions are improved, thereby to suppress the expulsion occurrence from the steel sheet surface, and also to be able to minimize the welding current, and which can provide a dissimilar metal joined part having a high joint strength.

Means for Solving Problem

The gist of the present invention for achieving the object is a dissimilar metal joining method of a cold rolled steel sheet and an aluminum alloy sheet by spot welding. The method includes: setting the thickness ts of the cold rolled steel sheet to be joined at 0.3 to 3.0 mm, and the thickness ta of the aluminum alloy sheet to be joined at 0.3 to 4.0 mm, and further, before performing spot welding to form a nugget under respective conditions of an inter-electrode electrode force: 2.5 to 4.5 kN, a welding current Iw: 14 to 26 kA, and a weld time Tw: 200 msec or less per a steel sheet thickness (ts) of 1 mm, previously performing pre-welding under the conditions, under which expulsion is not caused between the steel sheet and electrodes, and the aluminum alloy sheet side is not molten, of an inter-electrode electrode force: 2.5 to 4.5 kN, a welding current Ib: 6 to 12 kA, and a weld time Tb: 200 msec or less per a steel sheet thickness (ts) of 1 mm with respect to the electrodes brought in contact with the mutual sheets, and performing the spot welding in 1 second thereafter, wherein the conditions for the spot welding and the pre-welding further satisfy the following relational expression determined by the respective welding conditions the respective thicknesses:

$$\text{Relational expression: } 20 \le (\text{Ib}^2 \times \text{Tb} + \text{Iw}^2 \times \text{Tw}) \times \text{ts/ta} \le 55 \ (\text{kA}^2 \cdot \text{sec}).$$

Effect of the Invention

The present inventors conducted a study on a method for suppressing the expulsion occurrence from the steel sheet surface upon spot welding of steel sheet-aluminum alloy sheet. As a result, they found as follows: it is effective for suppression of expulsion occurrence to perform "pre-welding" of, before main welding of spot welding, previously passing a relatively low current through the steel sheet by the electrodes set for the main welding.

By the pre-welding, the temperature of the steel sheet is raised to reduce the deformation resistance. Further, the electrode force can reduce the unevenness of the contact part of the steel sheet with each electrode, resulting in an improvement of the contact state between the steel sheet and the electrode. Thus, this results in a substantial increase in contact area between the steel sheet and the electrode. Thus, the contact resistance between the steel sheet surface and the electrode is suppressed, which can reduce the heat generation between the steel sheet and the electrode. Accordingly, it is possible to suppress the occurrence of expulsion from the steel sheet surface. Further, use of the pre-welding not only can suppress the occurrence of expulsion between the steel sheet surface and the electrode, but also can preheat the steel sheet. For this reason, the effect of reducing the current of spot main welding can also be expected.

Namely, in accordance with the present invention, it is possible to obtain a dissimilar metal joined part (welding joint) with a high joint strength, and it is possible to improve the spot main welding state (welding efficiency).

Mode for Carrying out the Invention

Below, embodiments of the present invention will be described.

Pre-welding:

In the present invention, before spot main welding, under the conditions under which expulsion is not caused between the steel sheet and the electrode, and the aluminum alloy sheet side is not molten, pre-welding is previously performed. The pre-welding conditions are assumed to be the conditions of an inter-electrode electrode force: 2.5 to 4.5 kN, a welding current Ib: 6 to 12 kA, and a weld time Tb: 200 msec or less per a steel sheet thickness (ts) of 1 mm for the electrodes brought into contact with mutual sheets.

In order to suppress the expulsion occurrence from the steel sheet surface, it is effective to reduce the contact resistance between the electrode and the steel sheet. The factors determining the contact resistance are the electrode force, the surface conditions, and the contact area. By the electrode, pressurization is performed on the steel sheet. Then, there occur microscopic contact parts and non-contact parts between the electrode and the steel sheet. Thus, a current passes through only the substantially contact portions, so that heat generation occurs.

When the substantial contact area can be made larger, the contact resistance becomes relatively smaller. Accordingly, it is possible to suppress the heat generation, which can suppress the expulsion occurrence from the steel sheet surface. Conversely, when the non-contact part becomes larger, the contact resistance becomes relatively larger. Thus, the heat generation increases, resulting in an increase in amount of expulsion occurred from the steel sheet surface. When the electrode force is increased, the expulsion occurrence from the steel sheet surface is suppressed. This is due to this mechanism.

However, the electrode force is increased, which in turn results in an intensification in expulsion occurrence from the interface between the steel sheet and the aluminum sheet. This and other demerits impose a limitation on the increase in the electrode force. Alternatively, there can also be considered a method in which the steel sheet surface and the surface of the electrode are made smooth to increase the contact area. However, so long as a rolled steel sheet is used, it is difficult to improve the surface roughness to a given level or higher. Further, for the electrode, when an irregular shape or fusion of the metal is caused, dressing is performed. However, in order to perform efficient dressing, it is not advisable to reduce the finished roughness upon dressing more than necessary.

In contrast, as described above, with pre-welding, the steel sheet is preheated, resulting in an increase in steel sheet temperature. Accordingly, the deformation resistance is reduced. For this reason, pressurization of the electrode can reduce the unevenness of the contact part between the steel sheet and the electrode. This improves the contact state between the steel sheet and the electrode. Therefore, it is possible to increase the substantial contact area between the steel sheet and the electrode, which can reduce the contact resistance between the steel sheet surface and the electrode. This can reduce the heat value between the steel sheet and the electrode, which can suppress the expulsion occurrence from the steel sheet surface. Further, preheating of the steel sheet by the pre-welding also has an effect of reducing the current of the part of the spot main welding.

Incidentally, upon the pre-welding, heat generation also occurs between the steel sheet and the aluminum sheet. However, when aluminum is molten by the heat generation, during the spot main welding, the heat generation due to the contact resistance between the steel sheet and the aluminum sheet cannot be expected. Thus, heat is generated only by the electrical resistance which the steel sheet has. Accordingly, the temperature does not rise, resulting in the degradation of the efficiency. Further, the contact time between the molten aluminum and the steel sheet becomes longer, and hence the formation of the brittle intermetallic compound phase becomes more likely to be promoted. Further, the electrode force intensifies the expulsion occurrence of the aluminum sheet.

Welding current Ib in pre-welding:

For this reason, there is a current range (upper limit) for preventing aluminum from being molten by pre-welding. Thus, the welding current Ib in pre-welding is set at 12 kA or less. On the other hand, when the current during pre-welding is too small, the steel sheet cannot be heated effectively. Accordingly, the deformation resistance is not reduced, so that the contact state between the steel sheet and the electrode cannot be improved. Further, also, in view of the current control range of a common spot welding machine, the welding current Ib of pre-welding is set at 6 kA or more. Therefore, the range of the welding current Ib of pre-welding is set at 6 to 12 kA.

Weld time Tb of pre-welding:

The time of pre-welding does not largely affect the expulsion occurrence between the steel sheet surface and the electrode. Welding may be properly instantaneous, and the lower limit of the weld time is not provided. However, when the weld time is long, the steel sheet / aluminum is preheated excessively. This may result in that the brittle intermetallic compound phase is formed thicker than necessary. Further the welding time becomes longer, resulting in the degradation of the efficiency. Therefore, the condition is adopted that the weld time Tb is 200 msec or less per a steel sheet thickness (ts) of 1 mm in connection with the steel sheet thickness ts.

Inter-electrode electrode force of pre-welding:

The inter-electrode electrode force of pre-welding is set within the range of 2.5 to 4.5 kN as with the spot main welding. When the inter-electrode electrode force is too small, the unevenness of the contact part of the steel sheet with the electrode cannot be reduced even by pre-welding. Accordingly, the contact state between the steel sheet and the electrode cannot be improved. Therefore, it is not possible to increase the substantial contact area between the steel sheet and the electrode, which cannot reduce the contact resistance between the steel sheet surface and the electrode. This cannot reduce the heat value between the steel sheet and the electrode, which cannot suppress the expulsion occurrence from the steel sheet surface. On the other hand, when the inter-electrode electrode force is too high, the expulsion occurrence from the steel sheet-aluminum sheet during welding intensifies, and hence this is not suitable. Further, the range of the electrode force (pressurizing capability) of a common spot welding machine is also required to be considered.

Spot welding conditions:

Spot main welding is performed after the pre-welding without delay in time (continuously). Further, even when pre-welding and spot main welding are spaced in time, the time is set at 1 second or less. When pre-welding and spot main welding are spaced in time, the steel sheet is cooled, which impairs the effect of pre-welding of preheating the steel sheet. Further, the welding time becomes too long, and hence this is not efficient.

The spot main welding (main welding) conditions for the nugget formation in the present invention are set in order to obtain a high joint strength of the dissimilar metal welded joint of a cold rolled steel sheet and an aluminum alloy sheet. Namely, setting is achieved in order to obtain a high joint strength by properly forming the Fe-Al reaction layer with a required minimum thickness for metallurgical joining in spot main welding.

As the conditions required for every welding site of spot welding, first, the thickness ts of the cold rolled steel sheet to be joined is set at 0.3 to 3.0 mm, and the thickness ta of the aluminum alloy sheet to be joined is set at 0.3 to 4.0 mm. When the thicknesses are too thick, or too thin, respectively, the specified spot welding conditions become inappropriate thereto, and further, the application of spot welding itself becomes inappropriate.

On the premise of this thickness range, under respective conditions of the inter-electrode electrode force of spot welding: 2.5 to 4.5 kN, the welding current Iw: 14 to 26 kA, and the weld time Tw: 200 msec or less per a steel sheet thickness (ts) of 1 mm, spot welding is performed to form a nugget. When the conditions are not satisfied, even in connection with the pre-welding, spot welding is inappropriate, so that a high joint strength cannot be obtained. Incidentally, the foregoing thickness conditions are obvious, but are also the thickness conditions for pre-welding.

Incidentally, for spot welding under the present invention conditions, also including the pre-welding, the same spot welding devices for general purpose can be used. Thus, it is not necessary to change the welding device or combine different welding devices for the pre-welding. Further, the pre-welding and the spot main welding are carried out at the same electrode positions. Incidentally, a flux is not required to be used, but may be used, if required.

Herein, as the guide of the thickness of the reaction layer of Fe and Al necessary and minimum for the metallurgical joining, the mean thickness of the reaction layer in the nugget depth direction (thickness direction of the steel sheet) at the junction interface is controlled within the range of preferably 0.1 to 20 $\mu$m, and more preferably 1 to 20 pm. Incidentally, in the subsequent description, the reaction layer with such a thickness is referred to as an "optimum thickness reaction layer". The welding junction interface between the steel sheet and the aluminum alloy sheet has a laminar Al-Fe type compound layer on the steel sheet side, and a layer including a granular or needle-shaped Al-Fe type compound and Al-Fe-Si-Mn type compound mixed therein on the aluminum alloy sheet side as the reaction layers, respectively. When the mean thickness of the brittle reaction layers in the nugget depth direction is too large, the joint strength is remarkably reduced. On the other hand, when the mean thickness of the reaction layer in the nugget depth direction is too small, metallurgical joining becomes insufficient. Accordingly, a sufficient joint strength cannot be obtained. Therefore, the thickness of the reaction layer of Fe and AL is preferably set within the range of the foregoing mean thickness.

When the foregoing spot welding conditions such as the inter-electrode electrode force, the welding current, and the weld time are not satisfied, spot welding is inappropriate. Thus, the reaction layer of Fe and Al with a thickness necessary and minimum for the metallurgical joining cannot be properly formed at the joined part. Accordingly, a high joint strength cannot be obtained.

For example, when the inter-electrode electrode force is too low, the number of contact points between the steel sheet and the aluminum alloy sheet is small. Accordingly, the interface reaction during spot welding becomes non-uniform, so that the optimum thickness reaction layer cannot be obtained. On the other hand, when the inter-electrode electrode force is too high, the molten part scatters from the nugget during spot welding. Accordingly, the joint strength becomes insufficient.

Also when the welding current is too low, or the welding time is too short, the interface reaction during spot welding becomes insufficient. Thus, even if the nugget is sufficiently formed, the optimum thickness reaction layer cannot be achieved. Accordingly, the joint strength still becomes insufficient.

On the other hand, with the large-current long-time spot welding in which the welding current is too high, and too long in time, the interface reaction proceeds too much. Thus, the optimum thickness reaction layer rather cannot be achieved. Accordingly, the joint strength becomes insufficient.

Relation between spot welding and pre-welding:

In the present invention, the joined part is previously heated by pre-welding. Accordingly, selection of the spot main welding conditions is required to be determined in view of the pre-welding conditions. For selection of welding conditions, the heat input during welding is generally considered. However, in spot welding, the voltage during welding fluctuates, and hence it is difficult to grasp the heat input with precision. Further, a steel and aluminum are different in specific resistance and thermal conductivity from each other. For this reason, the heat input substantially contributing to welding is required to be considered.

It is known that, when the material and the electrode force are fixed, the heat input during spot main welding is proportional to (welding current)$^2 \times$ weld time. Further, the following is also known: first, at the initial stage of spot main welding, heat is generated by the contact resistance; then, heat is generated by the electric resistance of the material. However, the specific resistance of aluminum is 1/5 or less of that of the steel; and the thermal conductivity of aluminum is about five times that of the steel. For this reason, in the case of the dissimilar metal joining, aluminum hardly contributes to resistance heat generation, and rather has an action of taking away the heat generated in the steel by the thermal conductivity.

Therefore, at the time of setting the welding conditions for spot main welding, the thickness of the steel contributing to the heat generation, and the thickness of aluminum taking away the generated heat should be considered. Then, consideration is given to the heat input by $I^2 \times T \times ts/ta$ (I: welding current, T: weld time, ts: steel sheet thickness, ta: aluminum thickness). As a result, it was found that, as the optimum conditions for pre-welding + spot main welding in combination, the following relational expression was required to hold.

Relational expression of spot welding and pre-welding:

The relational expression is: $20 \leq (Ib^2 \times Tb + Iw^2 \times Tw) \times ts/ta \leq 55$ (kA$^2$.sec).

However, herein, Ib: pre-welding current, Tb: pre-welding weld time, Iw: spot welding current, Tw: spot welding weld time, ts: steel sheet thickness, and ta: thickness of aluminum alloy sheet.

Therefore, in the present invention, in order to achieve a high joint strength and welding efficiency, it is configured such that not only the respective individual conditions for spot main welding and pre-welding are satisfied, but also such that mutual respective weld conditions further satisfy the relational expression in connection with the respective thicknesses. In other words, even if respective individual conditions for spot main welding and pre-welding are satisfied, unless it is configured such that the mutual respective weld conditions further satisfy the relational expression, it is not possible to achieve a high joint strength and welding efficiency.

In accordance with the present invention, without previously improving the steel sheet side and the aluminum alloy sheet side which are the welding materials, with the minimum improvement by only application (adoption) of pre-welding on the spot welding side, it is possible to prevent the expulsion occurrence, and to obtain a dissimilar metal joining having a high joint strength. Therefore, it is possible to obtain a dissimilar metal joined part having a high joint strength due to spot welding without affecting the properties (characteristics) on the steel sheet or aluminum alloy sheet side, and without increasing the manufacturing cost of the steel sheet and the aluminum alloy sheet.

Chemical composition of steel sheet:

A description will be given of the composition of a cold rolled steel sheet intended to be joined by the present invention below. In the present invention, preferably, a high strength steel sheet (high tensile strength steel) including Si, Mn, or the like, and with a tensile strength of 450 MPa or more is assumed to be a main object.

For this reason, the composition of the cold rolled steel sheet is assumed to be, based on the premise that the composition preferably Si, Mn, and the like in prescribed amounts, a composition including, by mass %, C: 0.01 to 0.30 %, Si: 0.1 to 3.00 %, and Mn: 0.1 to 3.00 %, respectively, and preferably the balance including Fe and inevitable impurities. Alternatively, a composition is also acceptable which includes, in addition to this, further, Al: 0.002 to 0.1 %, and the balance including Fe and inevitable impurities. Still alternatively, a composition is also acceptable which includes, further, in addition to the Al, or in place of Al, one, or two or more of Nb: 0.005 to 0.10 %, Ti: 0.005 to 0.10 %, Zr: 0.005 to 0.10 %, Cr: 0.05 to 3.00 %, Mo: 0.01 to 3.00 %, Cu: 0.01 to 3.00 %, and Ni: 0.01 to 3.00 %, and the balance including Fe and inevitable impurities.

Herein, P, S, N, and the like as impurities of the steel sheet reduce various characteristics such as toughness and ductility, or the joint strength of the steel sheet. For this reason, respective contents are controlled to P: 0.10 % or less (including 0 %), S: 0.05 % or less (including 0 %), and N: 300 ppm or less (including 0 %), respectively. Incidentally, the units of the chemical components (contents of each element) in the present invention are all mass% including an aluminum alloy. The reasons for restricting respective component elements of the steel sheet are as follows.

C:

C is an element necessary for increasing the strength. However, when the content thereof is less than 0.01 %, the strength of the steel sheet cannot be ensured whereas, when the content exceeds 0.30 %, the cold workability is reduced. Accordingly, the C content is set within the range of 0.01 to

0.30 %.

Si:

Si is also important as an element capable of ensuring the necessary strength without deteriorating the ductility of the steel sheet. To this end, a content of 0.1 % or more is necessary. On the other hand, a content of more than 3.00 % results in the deterioration of the ductility. Accordingly, the Si content is also set within the range of 0.1 to 3.00 % for this reason.

Mn:

Mn is also essential as an element for ensuring the strength and the toughness of the steel sheet. When the content is less than 0.1 %, the effect thereof cannot be obtained. On the other hand, when the content exceeds 3.00 %, the strength remarkably increases. Thus, cold working becomes difficult. Accordingly, the Mn content is also set within the range of 0.1 to 3.00 % for this reason.

Al:

Al is an element also effective for trapping solute oxygen as the deoxidizing element of the molten steel, and preventing the occurrence of a blowhole for improving the toughness of the steel. When the Al content is less than 0.002 %, sufficient effects thereof cannot be obtained. On the other hand, a content of more than 0.1 % conversely results in the deterioration of the welding property, or the deterioration of the toughness of the steel due to an increase in alumina type inclusions. Accordingly, the Al content is set within the range of 0.002 to 0.1 %.

One, or two or more of Nb, Ti, Zr, Cr, Mo, Cu, and Ni:

The inclusion of one, or two or more of Nb, Ti, Zr, Cr, Mo, Cu, and Ni all contributes to an increase in strength and an increase in toughness of the steel. Out of these, Ti, Nb, and Zr each precipitate as a carbonitride in the steel, thereby to enhance the strength, and to refine the microstructure of the steel, resulting in the improvement of the strength, the toughness, and the like. However, a high content thereof largely deteriorates the toughness. Accordingly, when these are selectively included therein, there are adopted respective ranges of Nb: 0.005 to 0.10 %, Ti: 0.005 to 0.10 %, and Zr: 0.005 to 0.10 %.

Further, out of these, Cr, Mo, Cu, and Ni improve the hardenability, and improve the strength of the steel. However, a high content largely deteriorates the toughness of the steel. Accordingly, when these are included therein, there are adopted respective ranges of Cr: 0.05 to 3.00 %, Mo: 0.01 to 3.00 %, Cu: 0.01 to 3.00 %, and Ni: 0.01 to 3.00 %.

Strength of steel sheet:

In the present invention, from the uses of automobile members, and the like, a high strength steel sheet (high tensile strength steel) with a tensile strength of 450 MPa or more is intended to be a main target. Steels having a lower strength than this are generally often low alloy steels, and the oxide films are mostly iron oxides. Thus, diffusion of Fe and Al becomes easy, so that a brittle reaction layer tends to be formed. Further, the strength of the steel sheet is insufficient. For this reason, pressurization by the electrode chip during spot welding results in an increase in deformation of the steel sheet. Thus, the oxide film is readily broken, and hence the reaction with aluminum is abnormally promoted. As a result, a brittle intermetallic compound becomes more likely to be formed.

Aluminum alloy sheet:

The aluminum alloy sheet to be joined in the present invention is assumed to be a 6000 series aluminum alloy sheet in the Al-Mg-Si system AA or JIS standard. The alloy material has no particular restriction on the shape according to uses of respective parts of the automotive body. The sheet materials, sections, forged materials, cast materials, and the like, used for many purposes, are appropriately selected. However, the strength of the aluminum alloy sheet is desirably higher in order to suppress the deformation due to pressurization during spot welding as with the case of the steel sheet.

As for use in an automotive body panel, and the like, there are demanded various characteristics such as excellent press formability, BH property (bake hard property), strength, weldability, and corrosion resistance. In order to satisfy such demands, as the composition of a 6000 series aluminum alloy sheet, preferably, a 6000 series aluminum alloy includes, by mass%, Mg: 0.1 to 1.2 %, Si: 0.1 to 1.5 %, Cu: 0.001 to 1.0 %, Fe: 0.01 to 0.4, and Mn: 0.01 to 1.0, respectively, and the balance including Al and inevitable impurities. Further, in order for the BH property to be more excellent, it is preferable to implement an excessive Si type 6000 series aluminum alloy sheet with a mass ratio of Si and Mg Si/Mg of 1 or more.

Further, in addition to the foregoing respective preferable compositions, the composition may include one, or two or more of Cr: 0.001 to 0.2 %, Zr: 0.001 to 0.2 % in a total amount of 0.30 % or less, or selectively one or two of Zn: 0.001 to 0.25 %, and Ti: 0.001 to 0.10 %. Li may be included therein within the range of 0.01 to 0.5 %.

Other elements than these are basically impurities, and are set to have contents (allowable amounts) at respective impurity levels according to the AA or JIS standard or the like. However, when, from the viewpoint of recycle, as the molten materials, not only high purity Al ground metals but also 6000 series alloy, other aluminum alloy scrap materials, low-purity Al ground metals, and the like are used in large quantities as molten materials, there is a high possibility that impurity elements are mixed therein. Then, the reduction of the impurity elements to, for example, the detection limit or lower itself results in an increase in cost, which requires the permission of a certain degree of inclusion thereof. Therefore, other elements are permitted to be included within the range of permissible amounts according to respective AA or JIS standards, or the like.

The reasons for inclusion of respective elements in the 6000 series aluminum alloy are as follows:

Si: Si is an essential element, together with Mg, for solid-solution strengthening and for forming an aging precipitate contributing to the strength improvement during the artificial aging treatment at low temperatures such as a coating baking treatment, thereby exhibiting an aging age-hardening ability, and obtaining a necessary strength (proof stress) of, for example, 180 MPa or more. When the content thereof becomes insufficient, such an effect cannot be obtained. When the content is too large, the formability such as the press formability or the bendability is remarkably reduced, and further the weldability is also largely inhibited.

Mg: Mg is also an essential element for solid-solution strengthening, and for forming, together with Si, an aging precipitate contributing to the strength improvement during the artificial aging treatment such as a coating baking treatment, thereby exhibiting an age-hardening ability, and obtaining the necessary proof stress as a panel. When the content becomes insufficient, such an effect cannot be obtained. When the content is too large, the formability such as press formability or bendability is remarkably reduced.

Cu: Cu has an effect of promoting the formation of an aging precipitate contributing to the strength improvement into the crystal grains of an aluminum alloy sheet structure under the conditions of a relatively low-temperature and short-time artificial aging treatment. Further, the solute Cu also has an effect of improving the formability. When the content becomes insufficient, such an effect cannot be obtained. When the content is too large, the corrosion resistance and the weldability are remarkably deteriorated.

Fe: Fe has an effect of acting as with Mn, Cr, Zr, and the like, thereby to form disperse particles (disperse phase), preventing the grain boundary migration after recrystallization, and preventing the coarsening of crystal grains, and refining crystal grains. When the content becomes insufficient, such an effect cannot be obtained. When the content is too large, coarse crystallized grains become more likely to be formed, resulting in the deterioration of the fracture toughness, the fatigue characteristics, and the like.

Mn: Mn has an effect of forming a disperse particles (disperse phase) during the soaking heat treatment, and preventing the grain boundary migration after recrystallization, and hence has an effect capable of obtaining fine crystal grains. The press formability or hemmability improves with a decrease in crystal grain size of the aluminum alloy structure. When the content becomes insufficient, such an effect cannot be obtained. When the content is too large, the mechanical properties are reduced. Further, the formability such as bendability is reduced.

Zn: Zn also has an effect of, in addition to the effect of contributing to the improvement of the strength in solid-solution strengthening, remarkably promoting the age-hardening of the final product for the aging treatment. When the content becomes insufficient, such an effect cannot be obtained. When the content is too large, the susceptibility to the stress corrosion cracking and intergranular attack are remarkably enhanced, resulting in the reduction of the corrosion resistance and the durability.

Ti: Ti has an effect of refining the crystal grains of an ingot, and changing the extruded material structure into fine crystal grains. When the content becomes insufficient, such an effect cannot be obtained. When the content is too large, coarse precipitates are formed. This causes the reduction of the required characteristics such as bending crushing strength and the corrosion resistance as a reinforcing material, the bendability of the extruded material, and the like.

Cr, Zr: The transition elements such as Cr and Zr are, as with Mn, effective for forming disperse particles (disperse phase) including Al-Cr series, Al-Zr series, or other series intermetallic compounds, and preventing the coarsening of crystal grains. When the content becomes insufficient, such an effect cannot be obtained. When the content is too large, coarse precipitates are formed. When the content is too large, the required characteristics such as the bending crushing strength and the corrosion resistance as a reinforcing material and the mechanical properties are reduced. Further, the formability such as the bendability is reduced.

(Thickness of steel sheet or aluminum alloy sheet)

The thickness (thickness) of the portion to be welded of a steel sheet or an aluminum alloy sheet is selected or determined not only from the design for the spot welding but also from the design conditions such as the required strength and rigidity of the member applied to the automotive member or the like.

Assuming an automotive member or the like, practically, the thickness t of (the portion to be welded) of a cold rolled steel sheet is selected from 0.3 to 3.0 mm. When the thickness of the steel sheet is too thin, the strength and rigidity necessary as an automotive member cannot be ensured, resulting in an improper thickness. Further, in addition to this, for example, in the case by spot welding, the pressurization by the electrode chip results in large deformation of the steel sheet. Accordingly, the oxide film is broken with ease, and hence the reaction with aluminum is promoted. As a result, a brittle intermetallic compound becomes more likely to be formed. On the other hand, when the thickness of the steel sheet is too large, the spot welding joining itself becomes difficult.

The thickness t of (the portion to be welded) of the aluminum alloy sheet is selected from the range of 0.3 to 4.0 mm similarly assuming the automotive member or the like. When the thickness of the aluminum alloy sheet is too small, the strength as an automotive member is insufficient, resulting in an improper thickness. In addition, the nugget diameter cannot be obtained, and melting tends to reach both surfaces of the aluminum alloy sheet, so that expulsion tends to occur. Accordingly, a high joint strength may be unobtainable. On the other hand, when the thickness of the aluminum alloy sheet is too large, the welding joining itself becomes difficult as with the case of thickness of the steel sheet.

[Examples]

Below, examples of the present invention will be described.

Pre-welding test:

First, an examination was made on the effective range of, particularly, the welding current, not causing expulsion from the steel sheet, and melting between the steel sheet and the aluminum sheet, of the pre-welding. The results are shown in Table 3.

For the welding test, a 980MPa class high tensile strength cold rolled steel sheet with the composition shown in Table 1, and with a thickness ts of 1.4 mm, and a 6000 series aluminum alloy cold rolled sheet with each composition shown in Table 2, a thickness ta of 1.2 mm, and a 0.2% proof stress of 250 MPa were stacked one on another. Then, under the welding conditions shown in Table 3, simulating the pre-welding, spot welding of one-stage welding not using a flux was performed. Thus, it was confirmed whether or not the expulsion from the steel sheet, and melting between the steel sheet and the aluminum sheet occurred. As the electrodes, R type domical electrodes formed of a Cu-Cr alloy were used, wherein the positive electrode was an aluminum alloy sheet, and the negative electrode was a steel sheet.

Table 3 indicates as follows: based on the premise that the inter-electrode electrode force is 2.5 to 4.5 kN, and the weld time Tb is 200 msec or lower per a steel sheet thickness (ts) of 1 mm for the welding current of the pre-welding, the welding current Ib of 12 kA or less is an effective range. Namely, with 12 kA which is the upper limit value specified as the welding current Ib, expulsion is not caused between the steel sheet and the electrodes, and the aluminum alloy sheet side is not molten under any electrode force (regardless of the electrode force). However, when the welding current Ib becomes a larger current such as 14 to 18kA, expulsion between the steel sheet and electrodes is caused, or the aluminum alloy sheet side is molten according to the electrode force. For example, when the electrode force is set at a large pressure such as 4.5kN to suppress the expulsion occurrence, melting of the aluminum sheet at the steel sheet - aluminum sheet interface is observed under 16kA. Although it is considered that a difference is caused according to the type and the surface conditions of the steel sheet, the reproducibility and the reliability of the effects of suppressing these are impaired. Therefore, the reason for specifying the upper limit of the welding current Ib of the pre-welding at 12 kA is supported.

On the other hand, Table 3 indicates as follows: at the current Ib of up to 8 kA during pre-welding, at any electrode force (regardless of the electrode force), expulsion is not caused between the steel sheet and the electrodes, and the aluminum alloy sheet side is not molten. As described above, when the current Ib during pre-welding is too small, the steel sheet cannot be heated effectively. For this reason, the deformation resistance is not reduced, so that the contact state between the steel sheet and the electrodes cannot be improved. Therefore, from the data of the current Ib of 8kA during the pre-welding, also in consideration of the current control range of a common spot welding machine, the lower limit of the welding current Ib during pre-welding is specified at 6 kA. The reason for this is thus supported.

Spot welding test:

The conditions for pre-welding and main welding were variously changed, thereby to perform spot welding. Thus, an examination was made on the expulsion occurrence between the steel sheet and the electrodes, the consumption of the electrodes, and the joint strength. The results are shown in Table 4.

For the steel sheets and the aluminum alloy sheets, there were used those with the compositions of Tales 1 and 2 the same as those used for pre-welding, and with the same strength level. The mutual thicknesses were variously changed. These were each processed into the shape of a cross tensile test specimen according to JIS A3137, and were stacked one on another. Without using a flux, and by using the same welding machine, pre-welding and spot welding were performed to form a nugget. Thus, the dissimilar metals were joined to manufacture a welding joint (dissimilar metal welded joint).

Herein, the welding conditions common to respective examples will be described below. The steel sheet and the aluminum alloy sheet were both processed into the cross tensile test specimen shape (dimensions of 50 mm in width $\times$ 150 mm in length), and were stacked one on another. Then, at the mutually stacked central parts, electrodes were set to apply a pressure thereon. Thus, pre-welding was performed. Then, still in the state as it was, spot main welding was performed without delay in time (continuously). For the pre-welding and the spot welding, using the same monolayer rectifier type resistance spot welding machine (capacity 90 KVA), under the conditions of electrode force, welding current, and weld time shown in Table 4, pre-welding and spot welding at five points for each were performed. Also for the electrodes, in both the pre-welding and the spot welding, domical electrodes formed of the same Cu-Cr alloy and each with an electrode tip having a radius of curvature R were used. The positive electrode was an aluminum alloy sheet, and a negative electrode was a steel sheet.

Evaluation of expulsion occurrence or consumption of electrode:

The expulsion occurrence between the steel sheet and the electrodes or the consumption of the electrodes was visually evaluated, respectively. An example in which expulsion between the steel sheet and the electrodes was not caused at all the five points of the spot welding was rated as o; the one in which expulsion was caused at one or two points, but the improvement can be achieved by changing the welding conditions was rated as $\triangle$; and the one in which expulsion was vigorously caused in almost all examples, and the improvement cannot seem to be achieved by changing the welding conditions was rated as x. Further, for only the consumption of the electrode, pre-welding and spot welding were performed at 10 points, a double thereof. After the spot welding, the one in which consumption of the electrode was not caused was rated as o; the one in which "galling" being the start of consumption started to be caused was rated as $\triangle$; and the one in which consumption was apparently caused was rated as x.

Peel strength (joint strength):

The respective manufactured dissimilar metal welded joints were subjected to the cross tensile test by means of a tensile tester, thereby to determine the peel strength (maximum load). The results are also shown in Table 4. For the peel strength, with reference to the joint strength (record of performance) = 1.0 kN of the joint by spot welding between A6022 aluminum alloy sheets, the one with a peel strength of 1.5 kN or more was rated as ⊙; 1.0kN or more, as o; 0.7 to 1.0kN, as $\triangle$; and less than 0.7 kN, as x.

As apparent from Table 4, the dissimilar metal welded joints of the inventive examples have been subjected to pre-welding and spot welding of the main welding under respective appropriate conditions. Namely, not only individual conditions for the spot main welding and the pre-welding are satisfied, respectively, but also the mutual respective welding conditions further satisfy the relational expression. As a result, each inventive example has been able to be welded without expulsion occurrence between the steel sheet and the electrodes, or the consumption of the electrodes. Accordingly, the dissimilar metal welded joint of each inventive example has an excellent joint strength (peel strength).

On the other hand, as apparent from Table 4, for the dissimilar metal welded joint of each comparative example, the conditions for the main welding and the pre-welding are inappropriate. As a result, the expulsion occurrence between the electrodes or the consumption of the electrodes is caused. As a result, the spot main welding state (welding efficiency) is reduced, or the joint strength of the dissimilar metal welded joint is deteriorated; or both of these are caused.

In Comparative Examples 1 and 2, pre-welding is not performed, and so-called related-art spot welding is performed. Accordingly, the spot main welding state is reduced, so that the joint strength of the dissimilar metal welded joint is also inferior.

In Comparative Examples 3 and 12, the current of the main welding (spot main welding) is too small. Accordingly, although the spot main welding state is good, the joint strength of the dissimilar metal welded joint is inferior.

In Comparative Examples 5 and 11, the weld time of the pre-welding is too long. Accordingly, although the spot main welding state is good, the joint strength of the dissimilar metal welded joint is inferior.

In Comparative Examples 15 and 20, the current of the main welding (spot main welding) is too high. Accordingly, the spot main welding state is reduced, and the joint strength of the dissimilar metal welded joint is also inferior according to the magnitude of the current.

In Comparative Examples 7, 8, 10, 19, and 22, respective individual conditions for spot main welding and pre-welding are satisfied, but the mutually respective welding conditions do not satisfy the relational expression. For this reason, although the spot main welding state is good, the joint strength of the dissimilar metal welded joint is inferior. Therefore, from the viewpoint in combination with the inventive examples, the following is supported: even when respective individual conditions for spot main welding and pre-welding are satisfied, a high joint strength and favorable welding state cannot be achieved together unless the mutual respective welding conditions further satisfy the relational expression.

[Table 1]

| Composition of steel sheet (mass%, but N in ppm, the balance Fe) | | | | | | | | | | | | | | |
|---|---|---|---|---|---|---|---|---|---|---|---|---|---|---|
| C | Si | Mn | P | S | Al | N | Cr | Mo | Cu | Ni | Nb | Ti | V | Zr |
| 0.17 | 1.35 | 2.00 | 0.008 | 0.006 | 0.03 | 31 | 0.07 | 0.02 | 0.00 | 0.00 | 0.09 | 0.10 | 0.00 | 0.00 |

[Table 2]

| Composition of aluminum alloy sheet (mass%, the balance Al) | | | | | |
|---|---|---|---|---|---|
| Mg | Si | Cu | Fe | Ti | Mn |
| 0.77 | 0.92 | 0.1 | 0.1 | 0.01 | 0.2 |

[Table 3]

| Pre-welding conditions | | | Welding state | |
|---|---|---|---|---|
| Electrode force kN | Current Ib kA | Weld time Tb msec | Steel sheet - electrode expulsion occurrence | Aluminum melting at steel sheet - aluminum sheet interface |
| 2.5 | 8 | 40 | ○ | ○ |
| | 10 | 40 | ○ | ○ |
| | 12 | 40 | ○ | ○ |
| | 14 | 40 | Δ | Δ |
| | 16 | 40 | × | × |
| 3.5 | 10 | 40 | ○ | ○ |
| | 12 | 40 | ○ | ○ |
| | 14 | 40 | ○ | ○ |

(continued)

| Pre-welding conditions | | | Welding state | |
|---|---|---|---|---|
| Electrode force kN | Current Ib kA | Weld time Tb msec | Steel sheet - electrode expulsion occurrence | Aluminum melting at steel sheet - aluminum sheet interface |
| | 16 | 40 | Δ | × |
| | 18 | 40 | × | × |
| 4.5 | 12 | 40 | ○ | ○ |
| | 14 | 40 | ○ | ○ |
| | 16 | 40 | ○ | × |
| | 18 | 40 | Δ | × |

[Table 4]

| No. | Category | Thickness Steel sheet ts, mm | Thickness Aluminum alloy sheet ta, mm | Electrode force kN | Pre-welding conditions Current Ib kA | Pre-welding conditions Weld time Tb msec | Spot main welding conditions Current Iw kA | Spot main welding conditions Weld time Tw msec | Pre-welding-main welding relational expression value $(I_b^2 \times T_b + I_w^2 \times T_w) \times t_s/t_a$ $kA^2 \cdot sec$ | welding state Steel sheet-electrode expulsion occurrence | welding state Electrode consumption | Welded joint Peel strength | Welded joint Overall rating |
|---|---|---|---|---|---|---|---|---|---|---|---|---|---|
| 1 | Comp. Ex. | 1.4 | 1.2 | 3.5 | None | | 16 | 100 | 29.9 | △ | ○ | △ | △ |
| 2 | Comp. Ex. | 1.4 | 1.2 | 3.5 | None | | 22 | 40 | 22.6 | × | △ | △ | × |
| 3 | Comp. Ex. | 1.4 | 1.2 | 3.5 | 6 | 60 | 12 | 100 | 19.3 | ○ | ○ | × | × |
| 4 | Ex. | 1.4 | 1.2 | 3.5 | 6 | 200 | 14 | 200 | 54.1 | ○ | ◎ | ○ | ○ |
| 5 | Comp. Ex. | 1.4 | 1.2 | 3.5 | 6 | 400 | 14 | 100 | 39.7 | ○ | ◎ | × | × |
| 6 | Ex. | 1.4 | 1.2 | 3.5 | 6 | 200 | 16 | 100 | 38.3 | ○ | ◎ | ◎ | ○ |
| 7 | Comp. Ex. | 1.4 | 1.2 | 3.5 | 6 | 100 | 18 | 140 | 57.1 | ○ | ○ | × | × |
| 8 | Comp. Ex. | 1.4 | 1.2 | 3.5 | 8 | 160 | 14 | 200 | 57.7 | ○ | ○ | × | × |
| 9 | Ex. | 1.4 | 1.2 | 3.5 | 8 | 40 | 16 | 100 | 32.9 | ○ | ◎ | ◎ | ○ |
| 10 | Comp. Ex. | 1.4 | 1.2 | 3.5 | 8 | 40 | 16 | 300 | 92.6 | ○ | △ | × | × |
| 11 | Comp. Ex. | 1.4 | 1.2 | 3.5 | 8 | 400 | 16 | 100 | 59.7 | × | ○ | × | × |
| 12 | Comp. Ex. | 1.4 | 1.2 | 3.5 | 8 | 200 | 12 | 200 | 48.5 | ○ | ○ | × | × |
| 13 | Ex. | 1.4 | 1.2 | 3.5 | 8 | 80 | 22 | 40 | 28.6 | ○ | ○ | ○ | ○ |
| 14 | Ex. | 1.4 | 1.2 | 3.5 | 8 | 80 | 24 | 40 | 32.9 | ○ | ○ | ○ | ○ |
| 15 | Comp. Ex. | 1.4 | 1.2 | 3.5 | 8 | 80 | 30 | 40 | 48.0 | × | × | △ | × |
| 16 | Ex. | 1.4 | 1.2 | 3.5 | 10 | 40 | 14 | 200 | 50.4 | ○ | ○ | ◎ | ○ |
| 17 | Ex. | 1.4 | 1.2 | 3.5 | 10 | 40 | 16 | 100 | 34.5 | ○ | ◎ | O | ○ |
| 18 | Ex. | 1.4 | 1.2 | 3.5 | 10 | 120 | 20 | 40 | 32.7 | ○ | ○ | ○ | ○ |
| 19 | Comp. Ex. | 1.4 | 1.2 | 3.5 | 10 | 200 | 20 | 80 | 60.7 | ○ | ○ | × | × |
| 20 | Comp. Ex. | 1.4 | 1.2 | 3.5 | 10 | 100 | 28 | 40 | 48.3 | × | △ | ○ | × |
| 21 | Ex. | 1.4 | 1.2 | 3.5 | 12 | 40 | 16 | 100 | 36.6 | ○ | ○ | ◎ | ○ |

14

(continued)

| No. | Category | Thickness | | Electrode force kN | Pre-welding conditions | | Spot main welding conditions | | Pre-welding-main welding relational expression value | welding state | | Welded joint | |
|---|---|---|---|---|---|---|---|---|---|---|---|---|---|
| | | Steel sheet ts, mm | Aluminum alloy sheet ta, mm | | Current Ib kA | Weld time Tb msec | Current Iw kA | Weld time Tw msec | $(Ib^2 \times Tb + Iw^2 \times Tw) \times ts/ta$ kA²·sec | Steel sheet-electrode expulsion occurrence | Electrode consumption | Peel strength | Overall rating |
| 22 | Comp. Ex. | 1.4 | 1.2 | 3.5 | 12 | 200 | 22 | 40 | 56.2 | ○ | ○ | × | × |
| 23 | Ex. | 1.4 | 2.0 | 3.5 | 6 | 200 | 16 | 200 | 40.9 | ○ | ⊙ | ○ | ○ |
| 24 | Ex. | 1.2 | 1.2 | 3.0 | 8 | 40 | 16 | 200 | 53.8 | ○ | ⊙ | ○ | ○ |
| 25 | Ex. | 2.0 | 2.0 | 3.5 | 6 | 60 | 16 | 200 | 53.4 | ○ | ⊙ | ○ | ○ |
| 26 | Ex. | 2.0 | 2.0 | 4.0 | 6 | 60 | 18 | 140 | 47.5 | ○ | ⊙ | ○ | ○ |

The present invention was described in details with reference to specific embodiments. However, it is obvious to those skilled in the art that various changes and modifications may be added without departing from the spirit and the scope of the present invention.

Industrial Applicability

In accordance with the present invention, it is possible to provide a spot welding method in which the side of spot welding is improved, thereby to suppress the expulsion occurrence from the steel sheet surface, and also to be able to minimize the welding current, and which can provide a dissimilar metal joined part having a high joint strength. Such a dissimilar metal joining method is usefully applicable as a welding method of various structural members in the transport field of automobiles and railway vehicles, mechanical components, building structures, and the like.

**Claims**

**1.** A dissimilar metal joining method of a cold rolled steel sheet and an aluminum alloy sheet by spot welding, the method comprising:

setting the thickness ts of the cold rolled steel sheet to be joined at 0.3 to 3.0 mm, and the thickness ta of the aluminum alloy sheet to be joined at 0.3 to 4.0 mm, and further,
before performing spot welding to form a nugget under respective conditions of an inter-electrode electrode force: 2.5 to 4.5 kN, a welding current Iw: 14 to 26 kA, and a weld time Tw: 200 msec or less per a steel sheet thickness (ts) of 1 mm, the method being **characterized by**:
previously performing pre-welding under the conditions, under which expulsion is not caused between the steel sheet and electrodes, and the aluminum alloy sheet side is not molten, of an inter-electrode electrode force: 2.5 to 4.5 kN, a welding current Ib: 6 to 12 kA, and a weld time Tb: 200 msec or less per a steel sheet thickness (ts) of 1 mm with respect to the electrodes brought in contact with the mutual sheets, and
performing the spot welding in 1 second thereafter,
wherein the conditions for the spot welding and the pre-welding further satisfy the following relational expression determined by the respective welding conditions the respective thicknesses:

$$\text{Relational expression: } 20 \le (Ib^2 \times Tb + Iw^2 \times Tw) \times ts/ta \le 55 \ (kA^2 \cdot sec).$$

**Patentansprüche**

**1.** Verfahren zur Verbindung unähnlicher Metalle eines kaltgewalzten Stahlblechs und eines Aluminiumlegierungsblechs durch Punktschweißen, wobei das Verfahren umfasst:

das Einstellen der Dicke ts des zu verbindenden kaltgewalzten Stahlblechs auf 0,3 bis 3,0 mm und der Dicke ta des zu verbindenden Aluminiumlegierungsblechs auf 0,3 bis 4,0 mm und weiter,
wobei vor dem Durchführen von Punktschweißen zur Bildung einer Linse unter entsprechenden Bedingungen einer Zwischenelektroden-Elektrodenkraft: 2,5 bis 4,5 kN, eines Schweißstroms Iw: 14 bis 26 kA und einer Schweißzeit Tw: 200 msec oder weniger pro einer Stahlblechdicke (ts) von 1 mm,
das Verfahren **gekennzeichnet ist durch**
das vorhergehende Durchführen eines Vorschweißens unter den Bedingungen, bei welchen keine Austreibung zwischen dem Stahlblech und Elektroden verursacht wird und die Aluminiumlegierungsblechseite nicht geschmolzen wird, einer Zwischenelektroden-Elektrodenkraft: 2,5 bis 4,5 kN, eines Schweißstroms Ib: 6 bis 12 kA und einer Schweißzeit Tb: 200 msec oder weniger pro einer Stahlblechdicke (ts) von 1 mm, bezogen auf die Elektroden, die mit den beidseitigen Blechen in Kontakt gebracht werden, und
das Durchführen des Punktschweißens in 1 Sekunde danach,
wobei die Bedingungen für das Punktschweißen und das Vorschweißen weiter den folgenden Relativausdruck, der **durch** die jeweiligen Schweißbedingungen und die jeweiligen Dicken bestimmt wird, erfüllen:

$$\text{Relativausdruck: } 20 \leq (Ib^2 \times Tb + Iw^2 \times Tw) \times ts/ta \leq 55 \ (kA^2 \cdot sec).$$

## Revendications

1. Procédé d'assemblage de métaux différents formés d'une tôle d'acier laminée à froid et d'une tôle d'alliage d'aluminium, par soudage par points, le procédé comprenant :

le réglage de l'épaisseur ts de la tôle d'acier laminée à froid à assembler à 0,3 à 3,00 mm et l'épaisseur ta de la tôle d'alliage d'aluminium à assembler à 0,3 à 4,0 mm et, en outre, avant la réalisation du soudage par points pour former une pépite dans des conditions respectives d'un effort d'électrode entre électrodes de 2,5 à 4,5 kN, d'un courant de soudage Iw de 14 à 26 kA et d'un temps de soudage Tw de 200 ms ou moins par épaisseur de tôle d'acier (ts) de 1 mm, le procédé étant **caractérisé par** :

la réalisation préalable d'un pré-soudage dans les conditions dans lesquelles il ne se produit pas d'expulsion entre la tôle d'acier et les électrodes et le côté tôle d'alliage d'aluminium n'est pas fondu, d'un effort entre électrodes de 2,5 à 4,5 kN, d'un courant de soudage Ib de 6 à 12 kA et d'un temps de soudage Tb de 200 ms ou moins par épaisseur de tôle d'acier (ts) de 1 mm par rapport aux électrodes amenées en contact avec les tôles mutuelles, et
la réalisation du soudage par points en 1 seconde après,
dans lequel les conditions de soudage par points et de pré-soudage satisfont en outre à l'expression relationnelle suivante déterminée par les conditions de soudage respectives et les épaisseurs respectives :

```
expression relationnelle :
20 ≤ (Ib² x Tb + Iw² x Tw) x ts/ta ≤ 55 (kA²·sec).
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1738854 A
- JP 2002294487 A
- JP 2007144473 A
- JP 2007283313 A
- JP 2006167801 A
- JP 2006289452 A
- JP 2007260777 A
- JP 2006336070 A
- JP 2009299138 A
- JP 2009299139 A
- JP 11342477 A
- JP 2008200678 A
- JP 3941001 B
- JP 4425159 B
- JP 2006224127 A